# EUROPEAN PATENT SPECIFICATION

(11) **EP 4 358 010 B1**
(45) Date of publication and mention of the grant of the patent: **19.08.2026**
(21) Application number: 22878821.2
(22) Date of filing: 30.09.2022
(51) Int. Cl.: G06V 30/418, G06V 30/18, G06V 30/19, G06V 10/82, G06V 10/74, G06V 10/44, G06Q 50/20, G06F 16/732, G06F 16/783, G06F 16/738, G06T 11/60, G06N 3/045, G06N 3/08, G09B 5/02

(54) **METHOD AND DEVICE FOR ASSISTING LEARNING**
VERFAHREN UND VORRICHTUNG ZUR LERNUNTERSTÜTZUNG
PROCÉDÉ ET DISPOSITIF D'AIDE À L'APPRENTISSAGE

(30) Priority: 08.10.2021 KR 20210134103; 17.11.2021 KR 20210158752
(43) Date of publication of application: 24.04.2024
(73) Proprietor: Samsung Electronics Co., Ltd., Suwon-si, Gyeonggi-do 16677 (KR)
(72) Inventor: JUNG, Jaeil, Suwon-si, Gyeonggi-do 16677 (KR); PARK, Chanjong, Suwon-si, Gyeonggi-do 16677 (KR); BAHN, Dongha, Suwon-si, Gyeonggi-do 16677 (KR); JANG, Junik, Suwon-si, Gyeonggi-do 16677 (KR)
(74) Representative: HGF
(86) International application number: PCT/KR2022/014747
(87) International publication number: WO 2023/059000

(56) References cited:
- JP-A- 2015 201 185
- KR-A- 20180 097 117
- KR-A- 20180 101 959
- KR-A- 20180 125 360
- US-A1- 2021 076 105
- MA DI: "Automated indexing and annotation of lecture videos.", PROQUEST DISSERTATIONS & THESES GLOBAL: THE SCIENCES AND ENGINEERING COLLECTION, 1 December 2017 (2017-12-01), pages 1 - 111, XP093206585, Retrieved from the Internet <URL:https://www.proquest.com/dissertations-theses/automated-indexing-annotation-lecture-videos/docview/2023814434/se-2>

## Description

### BACKGROUND

### 1. Field

Various example embodiments relate to methods and/or devices for assisting learning.

### 2. Description of Related Art

The development of information and communication technology, like the Internet, has led to a rise in the creation of videos of lectures, previously only viewable in person, and providing them via the Internet.

People may watch online lectures wherever the Internet is available. Online lectures are less limited in time and space compared to offline lectures. With this advantage, online lecture systems are receiving growing attention, and accordingly, technologies related to online lectures are being developed.

Furthermore, development of deep learning technology in the image processing field has increased exponentially, which has increased the interest in technology for obtaining significant analysis results from lecture images using deep learning technology and using the analysis results.

Document "Automated indexing and annotation of lecture videos" by Di Ma, ProQuest Dissertations and Theses Global, describes video indexing and annotation using a machine learning based approach for automatic indexing and annotation of lecture videos.

### SUMMARY

It is time-consuming for a user to find a page corresponding to a lecture scene in lecture material which may comprise hundreds of pages while watching the lecture online, and accordingly, there is a demand for a technology for finding a page(s) corresponding to a lecture scene.

According to various example embodiments, at least one page corresponding to a lecture scene may be found using image processing deep learning technology.

In addition, according to various example embodiments, lecture notes included in the lecture scene may be synthesized with the lecture material using image processing deep learning technology.

According to an embodiment, a learning assistance method according to claim 1 is provided.

According to an embodiment, an electronic device according to claim 13 is provided.

In addition, various effects directly or indirectly ascertained through the present disclosure may be provided.

### BRIEF DESCRIPTION OF THE DRAWINGS

The above and other aspects, features, and advantages of certain embodiments of the present disclosure will be more apparent from the following detailed description, taken in conjunction with the accompanying drawings, in which:
FIG. 1 is a diagram illustrating a method of searching for a page corresponding to a lecture scene according to an example embodiment;
FIG. 2 is a diagram illustrating a type of lecture material according to an example embodiment;
FIG. 3 is a diagram illustrating image distortion according to an example embodiment;
FIG. 4 is a diagram illustrating a screen displaying a result of searching for a page corresponding to a lecture scene according to an example embodiment;
FIG. 5 is a flowchart illustrating an example of searching for a page corresponding to a lecture scene according to an example embodiment;
FIG. 6 is a diagram illustrating a method of synthesizing notes according to an example embodiment;
FIGS. 7A and 7B are diagrams illustrating a method of synthesizing notes using corresponding point information according to an example embodiment;
FIG. 8 is a flowchart illustrating a method of synthesizing notes according to an example embodiment; and
FIG. 9 is a block diagram illustrating an electronic device according to an example embodiment.

### DETAILED DESCRIPTION

The following structural or functional descriptions are exemplary to merely describe the example embodiments, and the scope of the example embodiments is not limited to the descriptions provided in the present specification.

Although terms of "first" or "second" are used to explain various components, the components are not limited to the terms. These terms should be used only to distinguish one component from another component. For example, a "first" component may be referred to as a "second" component, or similarly, and the "second" component may be referred to as the "first" component within the scope of the right according to the concept of the present disclosure.

It should be noted that if it is described that one component is "connected", "coupled", or "joined" to another component, at least a third component may be "connected", "coupled", and "joined" between the first and second components, although the first component may be directly connected, coupled, or joined to the second component. On the contrary, it should be noted that if it is described that one component is "directly connected", "directly coupled", or "directly joined" to another component, a third component may be absent. Expressions describing a relationship between components, for example, "between", directly between", or "directly neighboring", etc., should be interpreted to be alike.

The singular forms "a", "an", and "the" are intended to include the plural forms as well, unless the context clearly indicates otherwise. It should be further understood that the terms "comprises" and/or "comprising," when used in this specification, specify the presence of stated features, integers, steps, operations, elements, components or a combination thereof, but do not preclude the presence or addition of one or more of other features, integers, steps, operations, elements, components, and/or groups thereof.

Unless otherwise defined, all terms, including technical and scientific terms, used herein have the same meaning as commonly understood by one of ordinary skill in the art to which this disclosure pertains. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

The examples may be implemented as various types of products, such as, for example, a personal computer (PC), a laptop computer, a tablet computer, a smartphone, a television (TV), a smart home appliance, an intelligent vehicle, a kiosk, and a wearable device. Hereinafter, examples will be described in detail with reference to the accompanying drawings. In the drawings, like reference numerals are used for like elements.

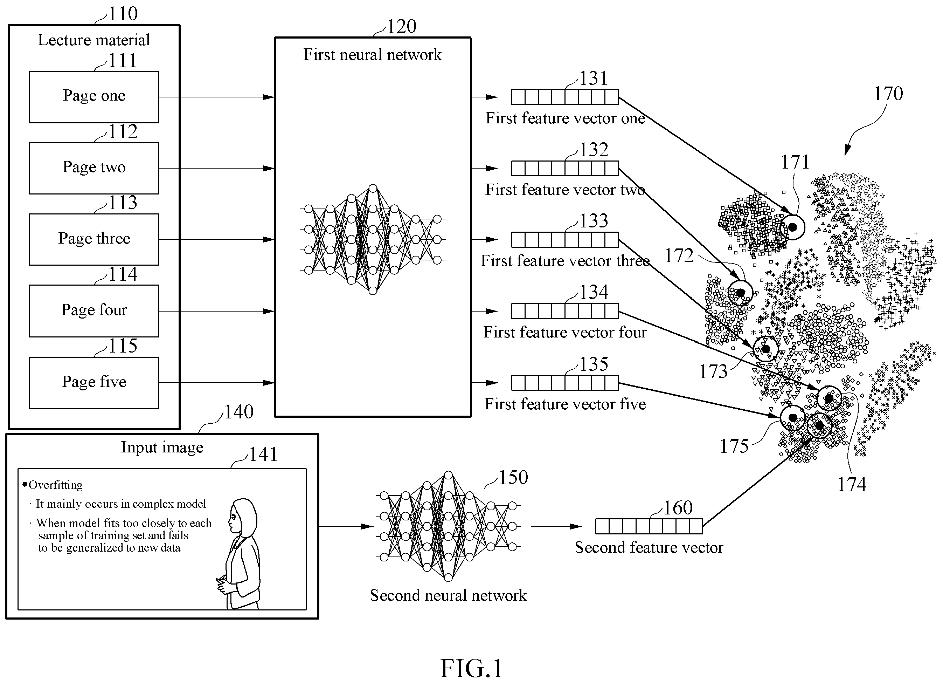

FIG. 1 is a diagram illustrating a method of searching for a page corresponding to a lecture scene according to an embodiment.

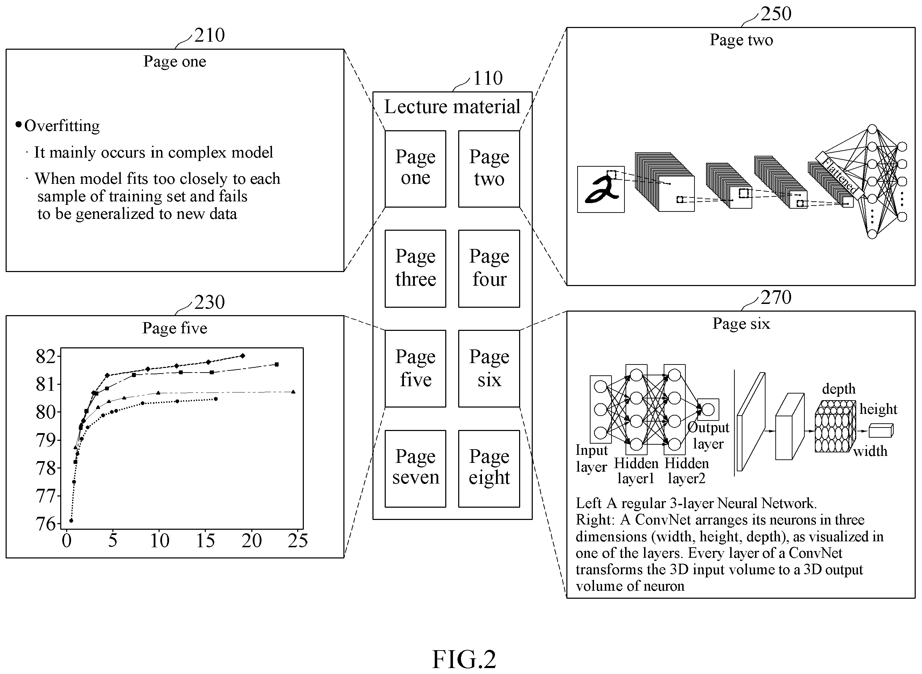

FIG. 1 illustrates lecture material 110, a plurality of pages 111, 112, 113, 114, and 115 (see corresponding pages 210, 150, 230, 270 in Fig. 2 as well), a first neural network 120, a plurality of first feature vectors 131,132, 133, 134, and 135, an input image 140, a lecture scene 141, a second neural network 150, a second feature vector 160, a vector space 170, and a plurality of vectors 171, 172, 173, 174, 175, and 176 displayed in the vector space. For the purpose of searching for a page corresponding to the lecture scene, some components may be omitted, and other components may be added.

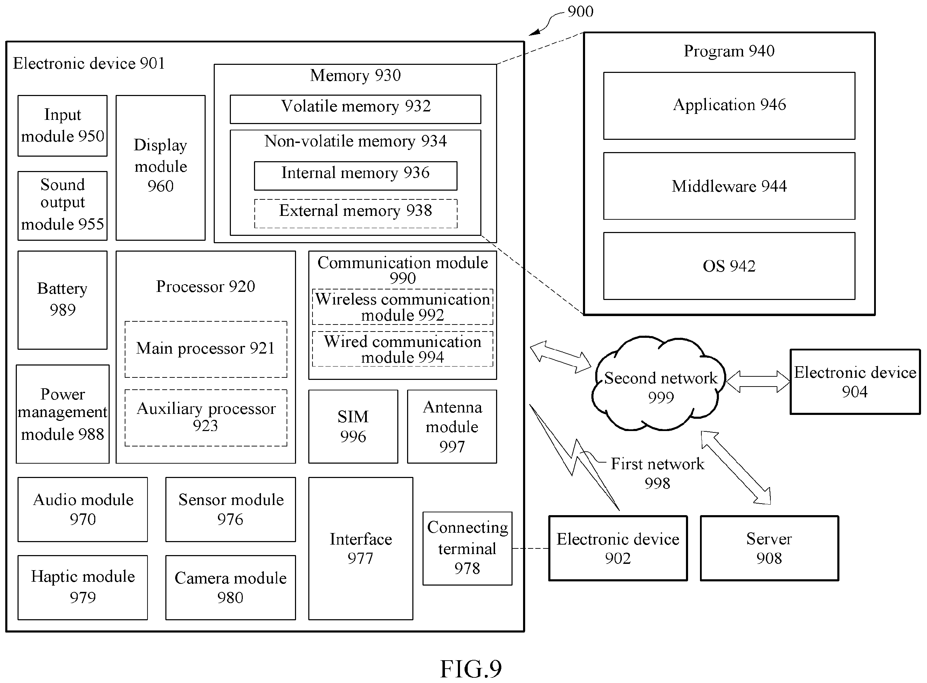

According to the embodiment, at least one processor 920 (e.g., see processor 920 in Fig. 9) receives the lecture material 110. The lecture material 110 may be material used for teaching people a particular subject or providing information. For example, the lecture material 110 may be data in an image or text form including lecture content. As yet another example, the lecture material 110 may be in a various forms such as PDF, PPT, and Word files.

According to an example embodiment, the processor 920 may receive the lecture material 110 from a user. The user may download a lecture material the user desires to use to an electronic device 901. The downloaded lecture material may be stored in a memory 930 of the electronic device 901, as shown in Fig. 9 for example.

According to an example embodiment, the processor 920 may register the lecture material 110 downloaded by the user to an application 946 included in the electronic device 901. According to an example embodiment, an application may include an application for outputting a lecture material on a display, an application for allowing an editing function to be used in the lecture material, and the like. Accordingly, the processor 920 may register the lecture material 110 downloaded by the user to the application 946 such that the user may view the registered lecture material through a display by executing the application 946.

According to the embodiment, the processor 920 generates the plurality of first feature vectors 131, 132, 133, 134, and 135 respectively corresponding to the pages included in the lecture material 110 using the first neural network 120 trained to distinguish pages included in a document. The first neural network 120 may include an encoder for extracting a feature vector.

The document may be a document in which pages are not distinguished. For the document in which pages are not distinguished, each page may be distinguished manually by the user and the processor 920 may receive and use the manually distinguished pages to generate a feature vector corresponding to each page. A user may have to spend a lot of time and money to manually distinguish pages of a document including hundreds of pages. Accordingly, the processor 920 may generate the plurality of first feature vectors using the first neural network 120 capable of automatically distinguishing the plurality of pages included in the document.

According to an example embodiment, the first neural network may be a neural network trained by a metric learning technique. The metric learning technique may be a technique for reducing a distance (e.g., a cosine similarity, a Euclidean similarity, etc.) between similar data (e.g., feature vectors) and increasing a distance between different data. According to an example embodiment, the first neural network 120 may include a neural network trained to increase a distance between feature vectors respectively corresponding to pages including different learning information in the lecture material and trained to reduce a distance between feature vectors respectively corresponding to pages including similar learning information in the lecture material. Accordingly, the processor 920 may allow the first neural network 120 to distinguish pages including different learning information.

According to an example embodiment, the processor 920 may distinguish the plurality of pages using the first neural network 120. Furthermore, the processor 920 may generate a feature vector related to learning information included in each of the pages using the first neural network 120. The plurality of first feature vectors 131, 132, 133, 134, and 135 generated by the processor 920 using the first neural network 120 may include a feature vector related to learning information included in the pages. According to an example embodiment, the processor 920 may store the plurality of first feature vectors 131, 132, 133, 134, and 135 respectively corresponding to the plurality of pages in the memory 930. Thereafter, in response to performing a search for a page corresponding to the lecture scene 141, the processor 920 may call the plurality of first feature vectors 131, 132, 133, 134, and 135 stored in the memory 930 to compare them with the second feature vector 160 corresponding to the lecture scene 141.

According to an example embodiment, the first feature vector one 131 may be a feature vector related to learning information included in the page one 111. According to one embodiment, the first feature vector two 132 may be a feature vector related to learning information included in the page two 112. According to one embodiment, the first feature vector three 133 may be a feature vector related to learning information included in the page three 113. A type of each page is described in detail below with reference to FIG. 2.

According to the embodiment, the processor 920 receives the input image 140 including the lecture scene 141 based on the lecture material. According to an example embodiment, the lecture scene 141 may be a scene for which the user needs to search for a page. According to an example embodiment, the processor 920 may search for a page corresponding to a lecture scene selected by the user. According to an example embodiment, the lecture scene may include a lecture scene from an offline lecture shot by the user or a lecture scene from an online lecture captured by the user. The processor 920 may search for a page for the lecture scene 141 in a way that reduces an amount of computation, time, and cost needed to perform the search. According to one embodiment, the processor 920 may search for pages corresponding to all lecture scenes included in an online lecture.

According to the embodiment, the processor 920 generates the second feature vector 160 corresponding to the lecture scene 141 using the second neural network 150. According to an example embodiment, the second neural network 150 may be a neural network trained to generate a feature vector related to learning information in the lecture scene 141. Accordingly, the processor 920 may generate the second feature vector 160 related to the learning information included in the lecture scene 141 using the second neural network 150. The processor 920 may search for a page corresponding to the lecture scene included in the lecture material using the generated second feature vector 160 and the plurality of first feature vectors stored in the memory 930.

According to an example embodiment, the first neural network 120 and the second neural network 150 may be neural networks trained to generate feature vectors which are a short distance apart for same learning information. For example, the processor 920 may generate the first feature vector related to learning information A (e.g., learning information for explaining overfitting) included in a page using the first neural network 120. In addition, the processor 920 may generate the second feature vector related to the learning information A (e.g., learning information for explaining overfitting) included in the lecture scene 141 using the second neural network 150. As both the first feature vector and the second feature vector are feature vectors for the same learning information A (e.g., learning information for explaining overfitting), the processor 920 may train the first neural network 120 and the second neural network to reduce a distance between the feature vectors.

According to an example embodiment, the first neural network 120 and the second neural network 150 may be neural networks trained to generate feature vectors which are a long distance apart for different learning information. For example, the processor 920 may generate the first feature vector related to learning information A (e.g., learning information for explaining overfitting) included in a page using the first neural network 120. In addition, the processor 920 may generate the second feature vector related to learning information B (e.g., learning information for explaining the philosophy of Socrates) included in the lecture scene 141 using the second neural network 150. As the first feature vector and the second feature vector are feature vectors for different learning information, the processor 920 may train the first neural network 120 and the second neural network to increase a distance between the feature vectors.

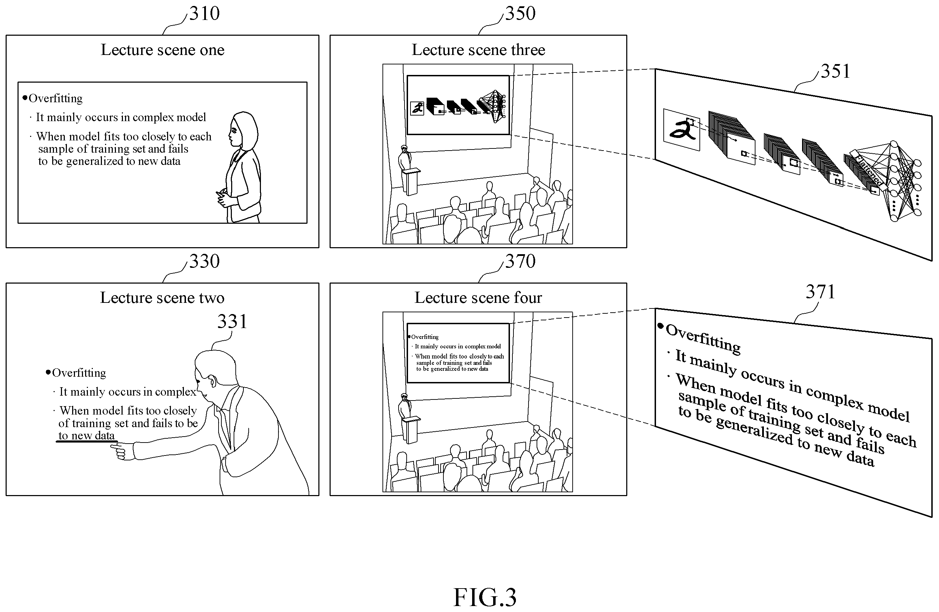

According to an example embodiment, the second neural network 150 may include a neural network trained to generate the second feature vector related to learning information in an input image with image distortion. The image distortion is described in detail below with reference to FIG. 3.

According to the embodiment, the processor 920 determines output page information indicating a page corresponding to a lecture scene among pages included in the lecture material based on a similarity between the second feature vector 160 and the plurality of first feature vectors 131, 132, 133, 134, and 135. According to an example embodiment, the processor 920 may respectively calculate a similarity between the first feature vector one 131 and the second feature vector 160, a similarity between the first feature vector two 132 and the second feature vector 160, a similarity between the first feature vector three 133 and the second feature vector 160, a similarity between the first feature vector four 134 and the second feature vector 160, and a similarity between the first feature vector five 135 and the second feature vector 160. "Based on" as used herein covers based at least on.

According to an example embodiment, a similarity may be a distance between feature vectors. The similarity may include information on how the feature vectors are similar to each other. In response to a decrease in the distance between the feature vectors, the processor 920 may determine that the feature vectors are similar to each other. As another example, in response to an increase in the distance between the feature vectors, the processor 920 may determine that the feature vectors are different from each other. The similarity may include, for example, a Euclidean distance, a cosine similarity, a Mahalanobis distance, and the like.

According to an example embodiment, the plurality of the first feature vectors 131, 132, 133, 134, and 135 and the second feature vector 160 may be displayed in the vector space 170. In the vector space 170, vectors similar to each other may be included in a same cluster, and vectors different from each other may be included in different clusters. For example, the first feature vector one 131 may be indicated by a dot one 171 in the vector space 170, and the second feature vector two 132 may be indicated by a dot two 172 in the vector space 170. As the dot one 171 and the dot two 172 are included in different clusters, they may be determined as different data. That is, the processor 920 may determine that the dot one 171 and the dot two 172 are feature vectors including different learning information. As another example, the first feature vector four 134 may be indicated by a dot four 174 in the vector space 170, and the first feature vector five 135 may be indicated by a dot five 175 in the vector space 170. As the dot four 174 and the dot five 175 are included in a same cluster, the processor 920 may determine that the feature vectors respectively corresponding to the dot four 174 and the dot five 175 are same data. That is, the processor 920 may determine that the dot four 174 and the dot five 175 indicate pages including same learning information. The same could apply for vector 133 and 173.

According to an example embodiment, the processor 920 may select the first feature vector having a similarity less than or equal to a predetermined criterion to determine a page corresponding to the first feature vector as a page corresponding to the lecture scene 141. The predetermined criterion may indicate that a distance between the second feature vector and the first feature vector is less than or equal to a predetermined criterion. As illustrated in FIG. 1, a distance between the dot four 174 and the dot six 176 corresponding to the second feature vector 160 and a distance between the dot five 175 between the dot six 176 may be less than or equal to the predetermined criterion. On the other hand, a distance between the dot one 171 and the dot six 176 and a distance between the dot two 172 and the dot six 176 may be greater than or equal to the predetermined criterion. Accordingly, the processor 920 may determine that the dot four 174 and the dot five 175 indicate pages corresponding to the lecture scene. As another example, the processor 920 may select the dot four 174 which is closer to the dot six 176 among the dot four 174 and the dot five 175 to determine that the dot four 174 indicates a page corresponding to the lecture scene. The processor 920 may determine at least one page corresponding to the lecture scene and determine output page information indicating the corresponding page.

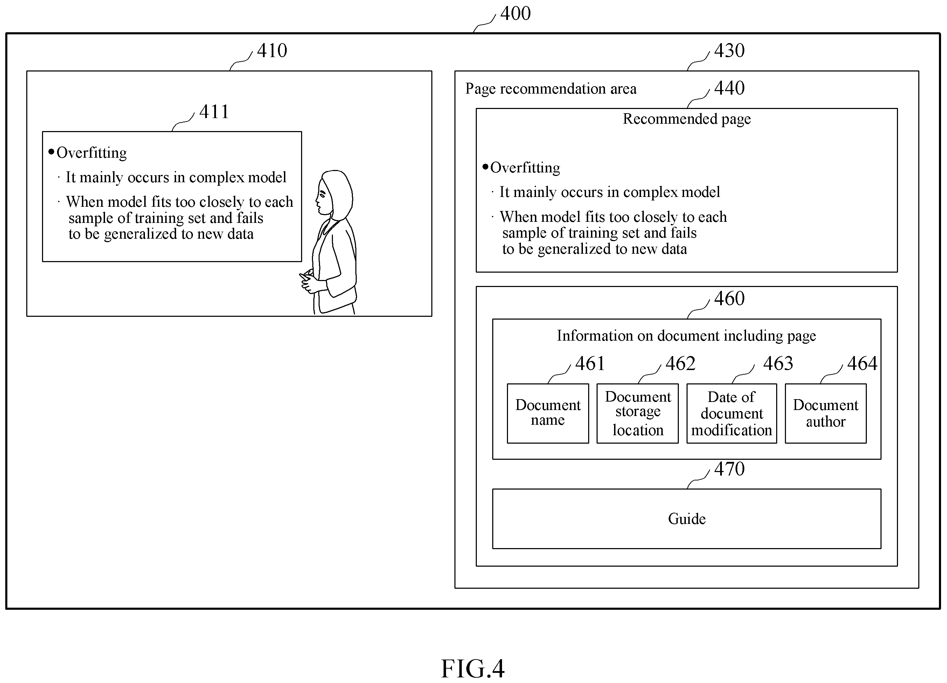

According to an example embodiment, the processor 920 may output a search result on a display using the output page information. Outputting a search result is described in detail below with reference to FIG. 4.

Users may quickly obtain lecture material corresponding to a lecture scene by merely inputting lecture materials and lecture scenes to the electronic device 901. As online lectures are increasing and more and more electronic devices (e.g., a laptop, tablet, etc.) are being used for offline lectures, being able to quickly find a particular page in lecture material corresponding to a lecture scene may be of considerable importance. During a lecture, if a user may not quickly find a page corresponding to a lecture scene in lecture material including hundreds of pages, the user's concentration may decrease. In addition, in many cases, a lecturer delivers a lecture by arbitrarily selecting a random page and moving on to another page and not by following the pages of the lecture material in order. Accordingly, being able to quickly find a page corresponding to a lecture scene in order to follow a lecture in which a situation is changing from moment to moment is becoming increasingly important. Therefore, searching for a predetermined page of lecture material, which corresponds to a lecture scene, using a neural network, may allow a user to concentrate more on the lecture and may give people taking the lecture the desire to purchase the electronic device.

In one embodiment, the processor 920 may use a single neural network to obtain the first feature vectors and the second feature vector 160. The neural network may be a neural network trained to extract a feature vector related to learning information from lecture material or a lecture scene. Accordingly, the processor 920 may generate a feature vector related to learning information included in each page of the lecture material using the neural network and also generate a feature vector related to learning information included in the lecture scene using the neural network. According to an example embodiment, the single neural network may be a neural network trained to distinguish pages included in a document. According to an example embodiment, the single neural network may include a neural network trained to increase a distance between feature vectors respectively corresponding to pages including different learning information in the lecture material and trained to reduce a distance between feature vectors respectively corresponding to pages including similar learning information in the lecture material. According to an example embodiment, the single neural network may include a neural network trained to generate the second feature vector related to learning information in an input image with image distortion.

FIG. 2 is a diagram illustrating a type of lecture material according to an example embodiment.

FIG. 2 illustrates lecture material 110, and page one 210 (e.g., page 111 in Fig. 1), page two 250, page five 230, and page six 270 of the lecture material.

According to an example embodiment, page one 210 may be a page including only text. In response to page one 210 including text being data in an image form, the processor 920 may generate a first feature vector using the first neural network 120. According to one embodiment, in response to page one 210 being text data, the processor 920 may convert page one 210 into image data and generate the first feature vector using the first neural network 120. According to an example embodiment, the first neural network 120 may be a neural network specialized in image processing. Thus, the processor 920 may increase prediction accuracy of a neural network by inputting a page as image data to the first neural network 120.

According to an example embodiment, page two 250 may be a page including a neural network structure. In addition, page five 230 may be a page including a result graph. Learning information, like page two 250 and page five 230, may be expressed in an image form not in a text form. In this example, when the first neural network is specialized for text data processing, the prediction accuracy of the neural network may be lower. Using a first neural network specialized for image processing may enable a search for a page corresponding to a lecture scene to be highly accurate even when the learning information is expressed in an image form.

According to an example embodiment, page six 270 may include learning information in an image form and learning information in a text form. When using a neural network specialized for text data processing, the processor 920 may have difficulty accurately extracting a feature related to the learning information from the page six 270 including both images and text. That is, the neural network specialized for text data processing may not input data in an image form. Even if the neural network performs pre-processing on the data in an image form to input the data, the prediction accuracy may be lower. The feature related to the learning information included in page six 270 may be accurately extracted by inputting the entire page six 270 as image data to the first neural network 120 specialized for image data processing.

According to an example embodiment, the lecture material 110 may include not only text but also various images such as a graph, a table, and a character. Accordingly, it may be required that a feature of learning information expressed in various forms is accurately extracted to be compared with a lecture scene. The processor 920 may generate a feature vector including feature information of each page with high accuracy, using a neural network, which is specialized for image data processing, to generate the feature vector for each page of the lecture material.

FIG. 3 is a diagram illustrating image distortion according to an example embodiment.

FIG. 3 illustrates lecture scene one 310, lecture scene two 330, lecture scene three 350, lecture scene four 370, a lecturer 331 obstructing learning information, learning information one 351 included in the lecture scene three 350, and learning information two 371 included in the lecture scene four 370.

According to an example embodiment, image distortion may indicate a factor is included that interferes with the accurate extraction of learning information from a lecture scene. According to an example embodiment, the image distortion may include at least one of a first distortion caused by a mechanical characteristic of a capturing device and a second distortion caused by a capturing environment. The first distortion may include radial distortion caused by a refractive index of a convex lens and tangential distortion caused by horizontal misalignment of a camera lens and an image sensor during manufacturing of a camera. That is, the first distortion may indicate that a straight line is deformed and/or unnaturally curved in an image. According to an example embodiment, in response to text or an image included in a lecture scene being deformed, the processor 920 may not generate accurate feature information using a second neural network. If the processor 920 generates less accurate feature information using the second neural network, a possibility of accurately finding a page corresponding to the lecture scene is less.

According to an example embodiment, the second distortion may include image distortion caused by a capturing environment. A lecturer, students taking a lecture, and other objects as well as lecture material may be a factor that obstructs learning information in the lecture scene. The lecture scene one 310 may be an image with no image distortion. The lecture scene two 330 may be an image in which the lecturer 331 partially obstructs the learning information. The second distortion may relate to a situation in which an accurate feature vector related to the learning information may not be easily extracted because other objects (e.g., a lecturer) obstruct the learning information as illustrated in the lecture scene two 330. In one embodiment, the second distortion may include distortion caused by an angle formed by a camera capturing the lecture scene and the information included in the lecture scene. The lecture scene three 350 and the lecture scene four 370 may each show an example of the second distortion. The lecture scene three 350 and the lecture scene four 370 may be results obtained by capturing lecture scenes from an oblique angle, not from the front. In response to the lecture scene being captured from an oblique angle, the lecture material, like the learning information one 351 included in the lecture scene three 350 and the learning information two 371 included in the lecture scene four 370, may have a trapezoidal shape in the capture, not a rectangular shape, and thus, content displayed in the lecture material may also be distorted. As in the example embodiment, in response to the lecture material included in the lecture scene being distorted, a similarity between each page of the lecture material stored in the electronic device and the lecture scene may be less accurately calculated. That is, a lecture scene and a lecture image which include same learning information may have a significantly low degree of similarity because of image distortion. Thus, correcting image distortion to generate a feature vector related to learning information may be of considerable importance.

According to an example embodiment, the processor 920 may generate a second feature vector using the second neural network, and the second neural network may include a neural network trained to generate a second feature vector related to learning information in an input image with image distortion. Accordingly, the processor 920 may find a page corresponding to a lecture scene in the lecture material with high accuracy even when the lecture scene has image distortion.

According to the embodiment, the second neural network includes a first sub-neural network for correcting image distortion and a second sub-neural network for obtaining a feature vector related to learning information from a distortion-corrected image. In response to receiving an input of a lecture scene with a new type of image distortion, the second neural network, in an example embodiment, may separate the first sub-neural network for correcting image distortion and the second sub-neural network for obtaining a feature vector and only update the first sub-neural network and maintain the second sub-neural network as it is to correct the corresponding image distortion. Accordingly, in an example embodiment, the processor 920 may use a neural network that may respond to a new environment by updating only a part of the second neural network to generate a second feature vector with respect to new image distortion with high accuracy, reducing learning time and an amount of computation.

FIG. 4 is a diagram illustrating a screen displaying a result of searching for a page corresponding to a lecture scene according to an example embodiment.

FIG. 4 illustrates a page search result screen 400, a lecture scene 410, learning information 411 included in the lecture scene, a page recommendation area 430, a recommended page 440, information 460 on a document including a page, a document name 461, a document storage location 462, a date of document modification (e.g., 463 in Fig. 4), a document author 464, and a guide 470. The page search result screen illustrated in FIG. 4 is merely an example, and some components may be added to the screen, and some components may be omitted from the screen.

According to an example embodiment, the page search result screen 400 may be a screen that shows a result of searching for a page corresponding to a lecture scene among pages included in lecture material. The processor 920 may determine output page information indicating a page corresponding to the lecture scene and output the page search result screen 400 on a display based on the determined output page information.

According to an example embodiment, the processor 920 may display information on a page corresponding to the learning information 411 included in the lecture scene 410 on the page recommendation area 430. The page recommendation area 430 may be an area in which information associated with the page corresponding to the lecture scene 410 is displayed.

According to an example embodiment, the output page information may include at least one of information on at least one page corresponding to an input image and guide information to output, on the display, information on a document including the page and the document.

According to an example embodiment, the recommended page 440 may be at least one page corresponding to the lecture scene 410. In response to calculating a similarity between the plurality of the first feature vectors and the second feature vector, the processor 920 may recommend a page including learning information most similar to the learning information 411 included in the lecture scene 410 to a user. According to one embodiment, however, a page including learning information similar to the learning information included in the lecture scene may be provided as a plurality of pages. Here, the processor 920 may guide the user to select a page corresponding to a current lecture scene or to select a page the user most needs in the current lecture scene by outputting the plurality of pages determined as the recommended page 440 on a display.

According to an example embodiment, the processor 920 may output a page selected by the user from among one or more of pages on the display based on information on at least one page corresponding to the lecture scene and user input information. The processor 920 may determine at least one candidate page corresponding to the lecture scene based on a result of calculating a similarity between the second feature vector and the plurality of first feature vectors. The processor 920 may determine a page to be finally output on the display among the at least one candidate page based on the user input information. That is, the processor 920 may show a page search result to the user. In response to receiving an input indicating that a page obtained as a search result will be used from the user, the processor 920 may output the corresponding page on the display. For example, in response to receiving a page selection input from the user, the processor 920 may output the page selected by the user on an entire display or a part of the display.

According to one embodiment, the processor 920 may output the at least one page corresponding to the lecture scene on the entire display or a part of the display without the page selection being input by the user. Therefore, pages in the lecture material may be quickly switched from one page to another according to a lecture scene transition.

According to an example embodiment, the document information 460 including the page may include information on a document including the page corresponding to the lecture scene. The document information 460 including the page may include, for example, information such as the document name 461, the document storage location 462, the date of document modification 463, and the document author 464. The document information described above is merely an example, and examples are not limited thereto.

According to an example embodiment, guide information may include information on a guide for informing a user about a technique for outputting a document on a display. The guide may include information on a guide that allows the user to find at least one page corresponding to a lecture scene found as a result of a search and a document including the corresponding page in the electronic device.

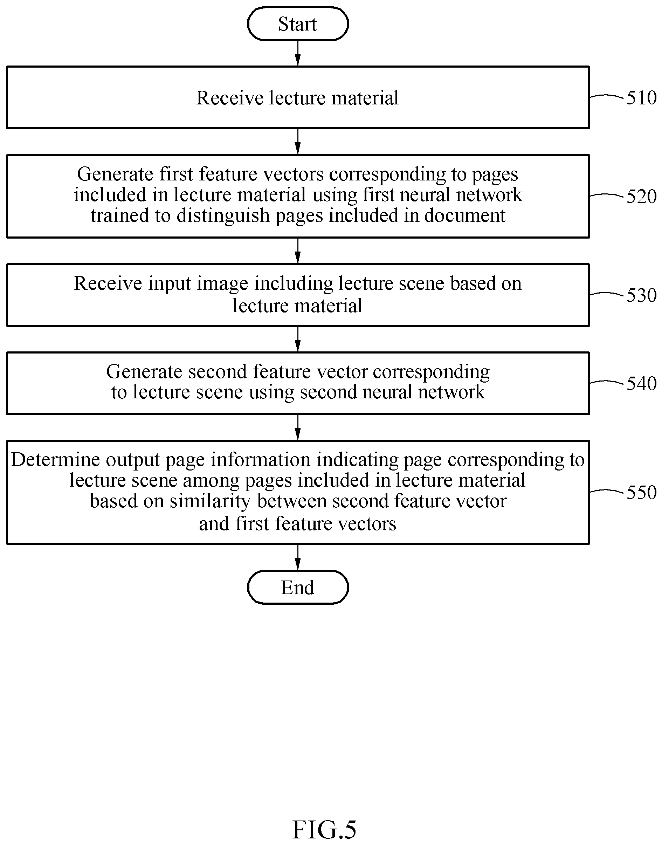

FIG. 5 is a flowchart illustrating an example of searching for a page corresponding to a lecture scene according to an embodiment.

According to the embodiment, the electronic device 901 inputs a document including learning information to a first neural network to obtain 510 a first feature vector(s) for each of one or more of pages included in the document (e.g., see 510 and 520 in Fig. 5).

According to the embodiment, the processor 920 receives an input image including learning information based on first user input information.

According to the embodiment, the processor 920 inputs the input image to a second neural network to obtain a second feature vector related to the learning information included in the input image (e.g., see 530 and 540 in Fig. 5).

According to the embodiment, the processor 920 calculates a similarity between the second feature vector and each of the first feature vectors to determine 540 output page information based on the similarity (e.g., see 550 in Fig. 5).

According to the embodiment, the processor 920 outputs, on a display, guide information used for outputting a document on a display. According to an example embodiment, guide information may include information on a guide for informing a user about a technique for outputting a document on a display. According to an example embodiment, the guide information may include information used to find a page corresponding to an input image. For example, the guide information may include a technique for using a page corresponding to a lecture scene, a technique for loading a document including the page corresponding to the lecture scene, and the like.

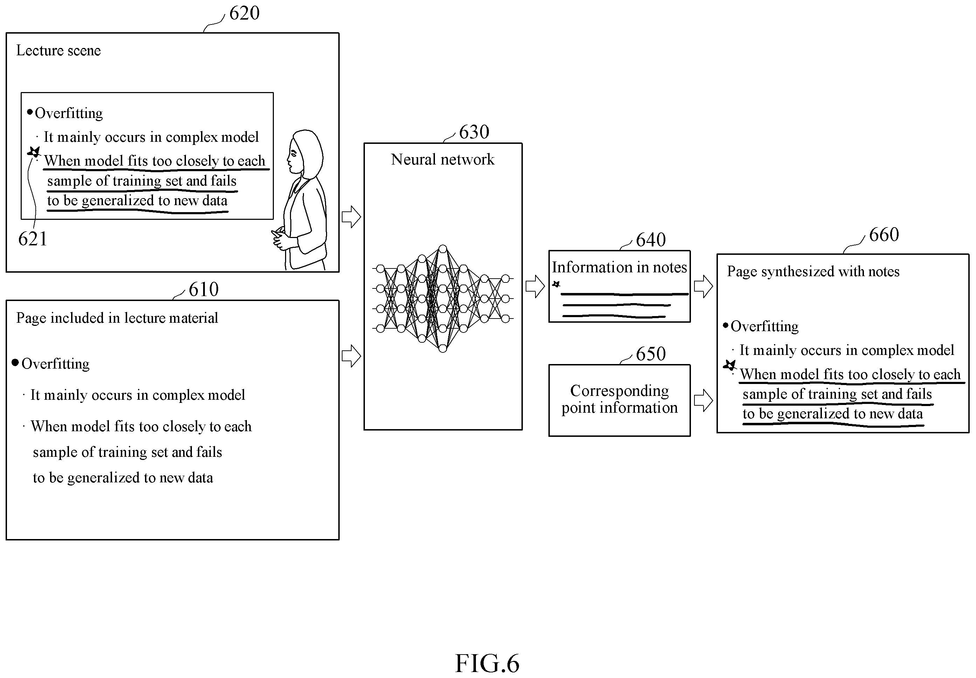

FIG. 6 is a diagram illustrating a method of synthesizing notes according to an example embodiment.

FIG. 6 illustrates a lecture scene 620, notes 621, a page 610 included in a lecture material, a neural network 630, information in notes 640, corresponding point information 650, and a page 660 synthesized with notes.

According to an example embodiment, the processor 920 may receive an input image including the lecture scene 620 based on the lecture material. The lecture scene 620 based on the lecture material may include the notes 621 as illustrated in FIG. 6. Notes 621 may be information a lecturer inputs on the lecture material shown in the lecture scene while giving a lecture. According to an example embodiment, a large amount of notes 621 may be taken during the lecture. When the lecture scene includes a large amount of notes 621, a student may not be able to concentrate on the lecture because they are focusing on taking notes. Accordingly, the processor 920 may extract notes included in the lecture scene 620 and synthesize the information in notes 640 and the lecture material such that a user may not have to take notes on the lecture material. Thus, the user may be able to concentrate more on listening to the lecture than on taking notes.

According to an example embodiment, the processor 920 may obtain the information in notes included in the lecture scene using a neural network trained to, based on a page included in a document, extract notes written on a corresponding page. According to an example embodiment, the information in notes may include at least one of position information on a position in the input image at which the notes are displayed and form information on notes displayed on the input image. According to an example embodiment, the neural network may be a neural network trained to only generate notes excluding learning information in the lecture scene. That is, as illustrated in FIG. 6, in an example embodiment the processor 920 may only extract the information in notes 640 and may not generate learning information (e.g., learning information for describing overfitting illustrated in FIG. 6) included in the lecture scene 620 using the neural network 630. According to an example embodiment, the neural network may include an encoder and a decoder. The processor 920 may generate a feature vector by receiving the page 610 included in the lecture scene 620 and the lecture material using at least the encoder. The processor 920 may obtain the information in notes 640 from the feature vector using at least the decoder.

According to an example embodiment, the processor 920 may synthesize the information in notes and a page corresponding to the lecture scene among the pages included in the lecture material. The processor 920 may input the entire page 610 included in the lecture scene 620 and the lecture material to the neural network 630 to synthesize the information in notes 640 included in the lecture scene 620 and the page 610 included in the lecture material. According to an example embodiment, the processor 920 may only use the information in notes 640 and not use the corresponding point information 650 to synthesize the information in notes 640 included in the lecture scene 620 and the page 610 included in the lecture material.

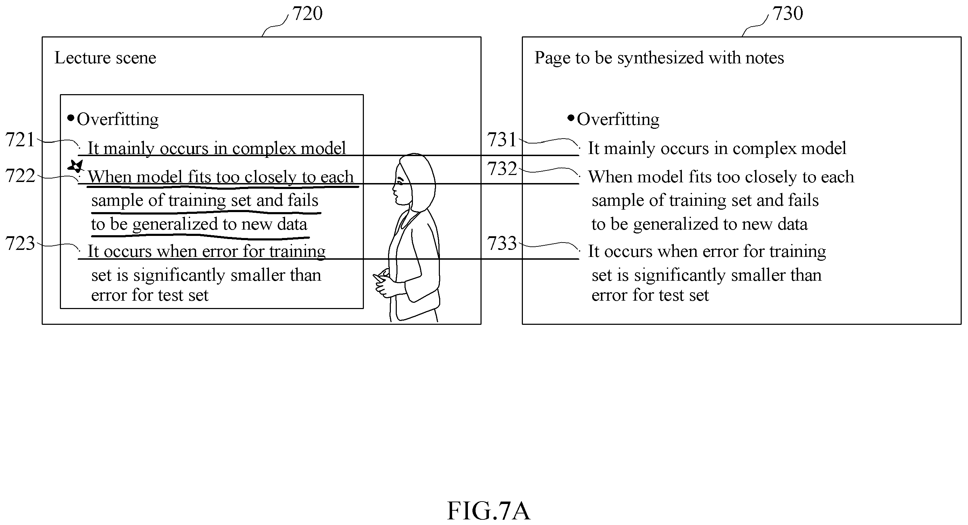

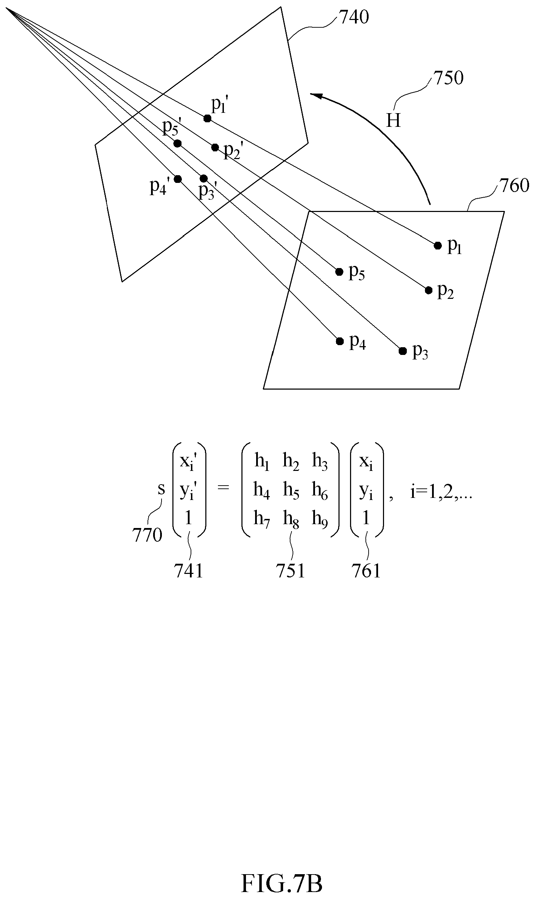

According to an example embodiment, the processor 920 may synthesize the notes 621 and the page 610 included in the lecture material using the information in notes 640 and the corresponding point information 650. The corresponding point information 650 may include information on a transformation relationship between a point included in the lecture scene and a point included in the corresponding lecture material. Transformation relationship information may be, for example, a homography. The transformation relationship information is described in detail hereinafter with reference to FIGS. 7A and 7B.

According to an example embodiment, a page included in a document may be a page corresponding to a lecture image. The page included in the document may include a page determined based on the output page information indicating the page corresponding to the lecture scene among pages included in the lecture material. That is, the processor 920 may search for the page (at least one page) corresponding to the lecture scene and synthesize the information in notes and the corresponding page using the first neural network 120 and the second neural network 150. According to an example embodiment, the processor 920 may synthesize the notes and the page (at least one page) corresponding to the lecture scene obtained using the first neural network 120 and the second neural network 150 such that the user may view the page synthesized with the notes through a display instead of manually taking the notes by finding the page (at least one page) corresponding to the lecture scene in the lecture material.

According to one embodiment, the page included in the document may be a page selected by the user. Accordingly, the processor 920 may synthesize the information in notes and the page selected by the user. Thus, the user may view a desired page synthesized with notes through a display.

FIGS. 7A and 7B are diagrams illustrating a method of synthesizing notes using corresponding point information according to an example embodiment.

FIG. 7A illustrates a lecture scene 720, a page 730 included in a lecture material, a plurality of feature points 721, 722, and 723, and a plurality of corresponding points 731, 732, and 733. The feature points and the corresponding points illustrated in FIG. 7A are merely examples, and examples are not limited thereto.

According to an example embodiment, a feature point may be a point indicating a feature in the lecture scene. For example, the feature point may include a point related to lecture content distinguished from a background among learning information included in the lecture scene. For example, the feature point may include a point in lecture content in a text form, a point in lecture content in a graph form, a point included in a table of contents of the lecture, an indicating line, a demarcation point, and the like. According to an example embodiment, the processor 920 may generate the feature point in the lecture scene using the neural network 630. According to an example embodiment, the neural network may be a neural network trained to extract the feature point of the lecture material distinguished from the background in the lecture scene. In one embodiment, the processor 920 may determine a point selected by the user in the lecture scene as the feature point.

According to an example embodiment, the corresponding point may be a point corresponding to the feature point in the page included in the lecture material. According to an example embodiment, the processor 920, comprising processing circuitry, may generate the corresponding point in the page included in the lecture material using the neural network 630. According to an example embodiment, the neural network 630 may include a neural network trained to extract a corresponding point in a page (at least one page) corresponding to the feature point. In one embodiment, the processor 920 may determine a point selected by the user as the corresponding point.

FIG. 7B illustrates a lecture scene 760, feature points 761 included in the lecture scene, transformation relationship information 750, a page 740 included in the lecture material, corresponding points 741 corresponding to the feature points, and a scale factor 770.

According to an example embodiment, the transformation relationship information 750 may include information on a predetermined transformation relationship established between projected points in response to a plane being projected on another plane. For example, the transformation relationship information 750 may be represented by a homography matrix 751. The processor 920 may determine argument values included in the homography matrix 751 using at least four pairs of points (feature point, corresponding point).

According to an example embodiment, the processor 920 may transform the feature points 761 into the corresponding points 741 corresponding to the respective feature points 761, using the homography matrix 751 in which the argument values are determined. As shown in FIG. 7B, corresponding points (*p*₁, *p*₂, *p*₃, *p*₄, *p*₅) may be illustrated on the lecture scene 760, and corresponding points (*p*'₁, *p*'₂, *p*'₃, *p*'₄, *p*'₅) may be illustrated on the page included in the lecture material. The processor 920 may find the corresponding points (*p*'₁, *p*'₂, *p*'₃, *p*'₄, *p*'₅) respectively corresponding to the feature points (*p*₁, *p*₂, *p*₃, *p*₄, *p*₅) using the transformation relationship information 750. Accordingly, the processor 920 may synthesize information in notes and a page (at least one page) with high accuracy, placing the information in notes on a position in the page corresponding to a position of information in notes included in the lecture scene.

Each embodiment herein may be used in combination with any other embodiment(s) described herein.

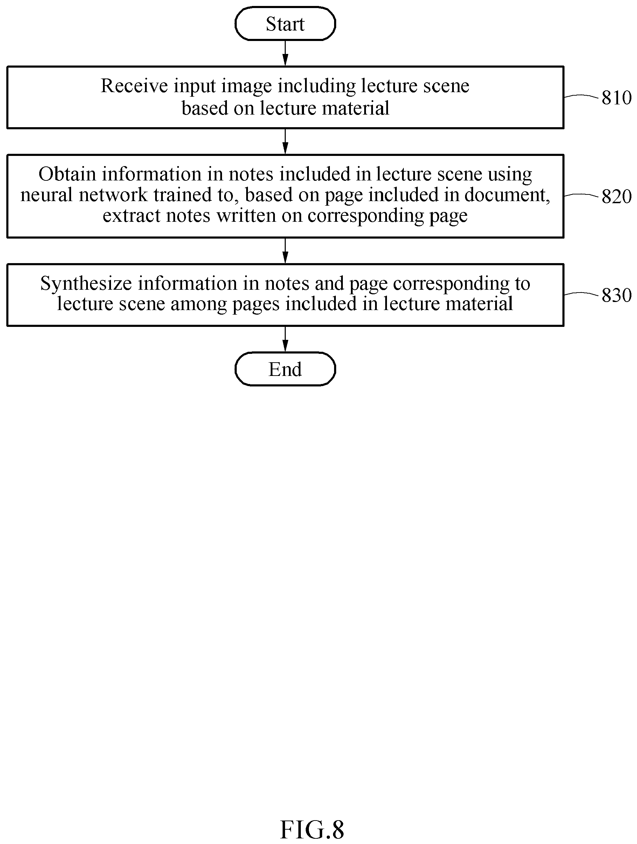

FIG. 8 is a flowchart illustrating a method of synthesizing notes according to an example embodiment.

According to an example embodiment, the processor 920 may receive an input image including a lecture scene based on a lecture material (e.g., 810 in Fig. 8).

According to an example embodiment, the processor 920 may obtain the information in notes included in the lecture scene using a neural network trained to, based on a page (at least one page) included in a document, extract notes written on a corresponding page (e.g., 820 in Fig. 8).

According to an example embodiment, the processor 920 may synthesize the information in notes and a page (at least one page) corresponding to the lecture scene among the pages included in the lecture material (e.g., 830 in Fig. 8).

According to an example embodiment, the processor 920 may output the page synthesized with the information in notes on a display. Accordingly, a user may view the page synthesized with the information in notes through the display. The user may verify whether content of notes included in a lecture screen is correctly synthesized with the page included in the lecture material. The information in notes generated by the processor 920 using a neural network may include wrong information. For example, the information in notes included in the lecture screen may be "Overfitting may occur in a process of training a neural network." The information in notes generated by the processor 920 using the neural network 630, however, may be "Underfitting may occur in a process of training a neural network." In this example, the error occurs because the processor 920 using the neural network 630 generates information in notes 640 that is different from the information in notes included in the lecture screen.

According to an example embodiment, the processor 920 may determine whether to use the page synthesized with the information in notes based on an input of a user. The user may view the page synthesized with the information in notes output on a display. Accordingly, the user may verify whether there is an error in the information in notes 640 generated by the processor 920 using the neural network 630. Furthermore, the processor 920 may receive information on whether to use the page synthesized with the information in notes from the user. In response to receiving a request to use the page synthesized with the information in notes from the user, the processor 920 may finally store the page synthesized with the information in notes in the memory 930. According to an example embodiment, in response to receiving a request to correct the information in notes 640 from the user, the processor 920 may correct the information in notes 640 generated by the processor 920 using the neural network 630. For example, in response to receiving the correction request from the user, the processor 920 may correct a position where the notes are written, content of the notes, and the like. Here, the correction request from the user may be input to the electronic device 901 through an annotation function. The processor 920 may store the page synthesized with the information in notes 640 corrected by the user to the memory 930. According to one embodiment, in response to receiving a request not to use the page synthesized with the information in notes from the user, the processor 920 may remove the corresponding page from the memory 930 without storing the same.

FIG. 9 is a block diagram illustrating an electronic device according to an embodiment.

FIG. 9 is a block diagram illustrating an electronic device 901 in a network environment 900 according to various example embodiments. Referring to FIG. 9, the electronic device 901 in the network environment 900 may communicate with an electronic device 902 via a first network 998 (e.g., a short-range wireless communication network), or communicate with at least one of an electronic device 904 or a server 908 via a second network 999 (e.g., a long-range wireless communication network). According to an example embodiment, the electronic device 901 may communicate with the electronic device 904 via the server 908. According to the embodiment, the electronic device 901 includes a processor 920, a memory 930, and may further include an input module 950, a sound output module 955, a display module 960, an audio module 970, and a sensor module 976, an interface 977, a connecting terminal 978, a haptic module 979, a camera module 980, a power management module 988, a battery 989, a communication module 990, a subscriber identification module (SIM) 996, or an antenna module 997. In some example embodiments, at least one of the components (e.g., the connecting terminal 978) may be omitted from the electronic device 901, or one or more of other components may be added to the electronic device 901. In some example embodiments, some of the components (e.g., the sensor module 976, the camera module 980, or the antenna module 997) may be integrated as a single component (e.g., the display module 960).

The processor 920 may execute, for example, software (e.g., a program 940) to control at least one other component (e.g., a hardware or software component) of the electronic device 901 connected, directly or indirectly, to the processor 920, and may perform various data processing or computation. According to an example embodiment, as at least a part of data processing or computation, the processor 920 may store a command or data received from another component (e.g., the sensor module 976 or the communication module 990) in a volatile memory 932, process the command or the data stored in the volatile memory 932, and store resulting data in a non-volatile memory 934 (which may include internal memory 936 and/or external memory 938). According to an example embodiment, the processor 920 may include a main processor 921 (e.g., a central processing unit (CPU) or an application processor (AP)), or an auxiliary processor 923 (e.g., a graphics processing unit (GPU), a neural processing unit (NPU), an image signal processor (ISP), a sensor hub processor, or a communication processor (CP)) that is operable independently from, or in conjunction with the main processor 921. For example, when the electronic device 901 includes the main processor 921 and the auxiliary processor 923, the auxiliary processor 923 may be adapted to consume less power than the main processor 921 or to be specific to a specified function. The auxiliary processor 923 may be implemented separately from the main processor 921 or as a part of the main processor 921.

The auxiliary processor 923 may control at least some of functions or states related to at least one (e.g., the display module 960, the sensor module 976 comprising at least one sensor, and/or the communication module 990 comprising communication circuitry) of the components of the electronic device 901, instead of the main processor 921 while the main processor 921 is in an inactive (e.g., sleep) state or along with the main processor 921 while the main processor 921 is an active state (e.g., executing an application). According to an example embodiment, the auxiliary processor 923 (e.g., an ISP or a CP) may be implemented as a portion of another component (e.g., the camera module 980 and/or the communication module 990) that is functionally related to the auxiliary processor 923. According to an example embodiment, the auxiliary processor 923 (e.g., an NPU) may include a hardware structure specified for artificial intelligence model processing. An artificial intelligence model may be generated by machine learning. Such learning may be performed by, for example, the electronic device 901 in which artificial intelligence is performed, or performed via a separate server (e.g., the server 908). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but examples of which are not limited thereto. The AI model may additionally or alternatively include a software structure other than the hardware structure.

The memory 930 may store various data used by at least one component (e.g., the processor 920 or the sensor module 976) of the electronic device 901. The various data may include, for example, software (e.g., the program 940) and input data or output data for a command related thereto. The memory 930 may include the volatile memory 932 or the non-volatile memory 934. Each "processor" herein comprises processing circuitry, and each "module" herein may comprise circuitry.

The program 940 may be stored as software in the memory 930, and may include, for example, an operating system (OS) 942, middleware 944, or an application 946.

The input module 950 may receive a command or data to be used by another component (e.g., the processor 920) of the electronic device 901, from the outside (e.g., a user) of the electronic device 901. The input module 950 may include, for example, a microphone, a mouse, a keyboard, a key (e.g., a button), or a digital pen (e.g., a stylus pen).

The sound output module 955 may output a sound signal to the outside of the electronic device 901. The sound output module 955 may include, for example, a speaker or a receiver. The speaker may be used for general purposes, such as playing multimedia or playing a record. The receiver may be used to receive an incoming call. According to an example embodiment, the receiver may be implemented separately from the speaker or as a part of the speaker.

The display module 960, comprising a display and/or circuitry, may visually provide information to the outside (e.g., a user) of the electronic device 901. The display module 960 may include, for example, a control circuit for controlling a display, a hologram device, or a projector and control circuitry to control a corresponding one of the display, the hologram device, and the projector. According to an example embodiment, the display module 960 may include a touch sensor adapted to detect a touch, or a pressure sensor adapted to measure the intensity of force incurred by the touch.

The audio module 970 may convert a sound into an electric signal or vice versa. According to an example embodiment, the audio module 970 may obtain the sound via the input module 950 or output the sound via the sound output module 955 or an external electronic device (e.g., the electronic device 902 such as a speaker or a headphone) directly or wirelessly connected to the electronic device 901.

The sensor module 976 may detect an operational state (e.g., power or temperature) of the electronic device 901 or an environmental state (e.g., a state of a user) external to the electronic device 901, and generate an electrical signal or data value corresponding to the detected state. According to an example embodiment, the sensor module 976 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 977 may support one or more of specified protocols to be used for the electronic device 901 to be coupled with the external electronic device (e.g., the electronic device 902) directly (e.g., wired) or wirelessly. According to an example embodiment, the interface 977 may include, for example, a high-definition multimedia interface (HDMI), a universal serial bus (USB) interface, a secure digital (SD) card interface, or an audio interface.

The connecting terminal 978 may include a connector via which the electronic device 901 may be physically connected, directly or indirectly, to an external electronic device (e.g., the electronic device 902). According to an example embodiment, the connecting terminal 978 may include, for example, an HDMI connector, a USB connector, an SD card connector, or an audio connector (e.g., a headphone connector).

The haptic module 979 may convert an electric signal into a mechanical stimulus (e.g., a vibration or a movement) or an electrical stimulus which may be recognized by a user via his or her tactile sensation or kinesthetic sensation. According to an example embodiment, the haptic module 979 may include, for example, a motor, a piezoelectric element, or an electric stimulator.

The camera module 980 may capture a still image and moving images. According to an example embodiment, the camera module 980 may include one or more of lenses, image sensors, image signal processors, or flashes.

The power management module 988 may manage power supplied to the electronic device 901. According to an example embodiment, the power management module 988 may be implemented as, for example, at least a part of a power management integrated circuit (PMIC).

The battery 989 may supply power to at least one component of the electronic device 901. According to an example embodiment, the battery 989 may include, for example, a primary cell which is not rechargeable, a secondary cell which is rechargeable, or a fuel cell.

The communication module 990, comprising communication circuitry, may support establishing a direct (e.g., wired) communication channel or a wireless communication channel between the electronic device 901 and the external electronic device (e.g., the electronic device 902, the electronic device 904, or the server 908) and performing communication via the established communication channel. The communication module 990 may include one or more of communication processors that are operable independently of the processor 920 (e.g., an AP) and that support a direct (e.g., wired) communication or a wireless communication. According to an example embodiment, the communication module 990 may include a wireless communication module 992 (e.g., a cellular communication module, a short-range wireless communication module, or a global navigation satellite system (GNSS) communication module) or a wired communication module 994 (e.g., a local area network (LAN) communication module, or a power line communication (PLC) module). A corresponding one of these communication modules may communicate with the external electronic device 904 via the first network 998 (e.g., a short-range communication network, such as Bluetooth^{™}, wireless-fidelity (Wi-Fi) direct, or infrared data association (IrDA)) or the second network 999 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multi components (e.g., multi chips) separate from each other. The wireless communication module 992 may identify and authenticate the electronic device 901 in a communication network, such as the first network 998 or the second network 999, using subscriber information (e.g., international mobile subscriber identity (IMSI)) stored in the SIM 996.

The wireless communication module 992 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 992 may support a high-frequency band (e.g., a mmWave band) to achieve, e.g., a high data transmission rate. The wireless communication module 992 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 992 may support various requirements specified in the electronic device 901, an external electronic device (e.g., the electronic device 904), or a network system (e.g., the second network 999). According to an example embodiment, the wireless communication module 992 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 997, comprising at least one antenna, may transmit or receive a signal or power to or from the outside (e.g., the external electronic device) of the electronic device 901. According to an example embodiment, the antenna module 997 may include an antenna including a radiating element including a conductive material or a conductive pattern formed in or on a substrate (e.g., a printed circuit board (PCB)). According to an example embodiment, the antenna module 997 may include a plurality of antennas (e.g., array antennas). In such a case, at least one antenna appropriate for a communication scheme used in a communication network, such as the first network 998 or the second network 999, may be selected by, for example, the communication module 990 from the plurality of antennas. The signal or the power may be transmitted or received between the communication module 990 and the external electronic device via at least one selected antenna. According to an example embodiment, another component (e.g., a radio frequency integrated circuit (RFIC)) other than the radiating element may be additionally formed as a part of the antenna module 997.

According to various example embodiments, the antenna module 997 may form a mmWave antenna module. According to an example embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled, directly or indirectly, mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an example embodiment, commands or data may be transmitted or received between the electronic device 901 and the external electronic device 904 via the server 908 coupled, directly or indirectly, with the second network 999. Each of the external electronic devices 902 or 904 may be a device of the same type as or a different type from the electronic device 901. According to an example embodiment, all or some of operations to be executed by the electronic device 901 may be executed at one or more of external electronic devices (e.g., the external devices 902 and 904, and the server 908). For example, if the electronic device 901 needs to perform a function or a service automatically, or in response to a request from a user or another device, the electronic device 901, instead of, or in addition to, executing the function or the service, may request one or more of external electronic devices to perform at least part of the function or the service. The one or more of external electronic devices receiving the request may perform the at least part of the function or the service requested, or an additional function or an additional service related to the request, and may transfer an outcome of the performing to the electronic device 901. The electronic device 901 may provide the outcome, with or without further processing of the outcome, as at least part of a reply to the request. To that end, a cloud computing, distributed computing, mobile edge computing (MEC), or client-server computing technology may be used, for example. The electronic device 901 may provide ultra low-latency services using, e.g., distributed computing or mobile edge computing. In an example embodiment, the external electronic device 904 may include an Internet-of-things (IoT) device. The server 908 may be an intelligent server using machine learning and/or a neural network. According to an example embodiment, the external electronic device 904 or the server 908 may be included in the second network 999. The electronic device 901 may be applied to intelligent services (e.g., smart home, smart city, smart car, or healthcare) based on 5G communication technology or IoT-related technology.

## Claims

1. A learning assistance method using an electronic device (901), the learning assistance method comprising:
receiving (510) lecture material;
generating (520) first feature vectors corresponding to pages comprised in the lecture material using a first neural network trained to distinguish pages comprised in a document;
receiving (530) an input image comprising a lecture scene, the lecture scene comprising at least a part of the lecture material;
generating (540) a second feature vector corresponding to the lecture scene using a second neural network; and
determining (550) output page information indicating a page corresponding to the lecture scene, among the pages comprised in the lecture material, based on a similarity between the second feature vector and the first feature vectors,
wherein the second neural network comprises:
a first sub-neural network configured to correct image distortion; and
a second sub-neural network configured to obtain a feature vector related to at least some learning information from a distortion-corrected image.

2. The learning assistance method of claim 1, wherein the output page information comprises at least one of: information on at least one page corresponding to the lecture scene, and guide information used to output information on a document comprising the page and the document on a display.

3. The learning assistance method of claim 1, further comprising:
outputting, on a display, a page selected by a user from at least one page based on information on at least one page corresponding to the lecture scene and user input information.

4. The learning assistance method of claim 1, further comprising:
outputting, on a display, guide information used to output the document on a display.

5. The learning assistance method of claim 1, wherein the first neural network is trained to:
increase a distance between feature vectors respectively corresponding to pages comprising different learning information in the lecture material; and
reduce a distance between feature vectors respectively corresponding to pages comprising similar learning information in the lecture material.

6. The learning assistance method of claim 1, wherein the first feature vector comprises a feature vector related to at least some learning information comprised in the page.

7. The learning assistance method of claim 1, wherein the image distortion comprises at least one of a first distortion caused by a mechanical characteristic of a capturing device and a second distortion caused by a capturing environment.

8. The learning assistance method of claim 1, further comprising:
obtaining information in notes comprised in the lecture scene; and
synthesizing the information in the notes among the page corresponding to the lecture scene.

9. The learning assistance method of claim 8, further comprising:
outputting at least one page synthesized with the information in notes on a display; and
determining whether to use the at least one page synthesized with the information in notes based on user input information.

10. The learning assistance method of claim 8, wherein the page comprised in the document is at least one page determined based on at least one of: output page information indicating at least one page corresponding to the lecture scene among the pages comprised in the lecture material, and user input information comprising information on a user selection of at least one page comprised in the lecture material.

11. The learning assistance method of claim 8, wherein the neural network comprises a neural network trained to extract a feature point of lecture material distinguished from a background in the lecture scene and extract a corresponding point corresponding to the feature point in the page, or
wherein the synthesizing of the information in notes comprises synthesizing the information in notes based on a transformation relationship information between the feature point and the corresponding point, or
wherein the information in notes comprises at least one of: position information on a position in the input image at which notes are displayed, and form information on a form of the notes displayed on the input image.

12. A non-transitory computer-readable storage medium storing instructions that, when executed by a processor, cause the processor to perform the learning assistance method of claim 1.

13. An electronic device, comprising:
at least one processor (920); and
a memory (930) configured to store at least one instruction executable by the at least one processor,
wherein the at least one processor is configured to:
receive (510) lecture material;
generate (520) first feature vectors corresponding to pages comprised in the lecture material using a first neural network trained to distinguish pages comprised in a document;
receive (530) an input image comprising a lecture scene, the lecture scene comprising at least a part of the lecture material;
generate (540) a second feature vector corresponding to the lecture scene using a second neural network; and
determine (550) output page information indicating a page corresponding to the lecture scene, among the pages comprised in the lecture material, based on a similarity between the second feature vector and the first feature vectors,
wherein the second neural network comprises:
a first sub-neural network configured to correct image distortion; and
a second sub-neural network configured to obtain a feature vector related to at least some learning information from a distortion-corrected image.

## Patentansprüche

1. Lernunterstützungsverfahren unter Verwendung einer elektronischen Vorrichtung (901), wobei das Lernunterstützungsverfahren Folgendes umfasst:
Empfangen (510) von Vorlesungsmaterial;
Erzeugen (520) erster Merkmalsvektoren, die Seiten entsprechen, die im Vorlesungsmaterial enthalten sind, unter Verwendung eines ersten neuronalen Netzes, das so trainiert ist, dass es in einem Dokument enthaltene Seiten unterscheidet;
Empfangen (530) eines Eingabebildes, das eine Vorlesungsszene umfasst, wobei die Vorlesungsszene mindestens einen Teil des Vorlesungsmaterials umfasst;
Erzeugen (540) eines zweiten Merkmalsvektors, der der Vorlesungsszene entspricht, unter Verwendung eines zweiten neuronalen Netzes; und
Bestimmen (550) von Ausgabeseiteninformationen, die eine Seite angeben, die der Vorlesungsszene entspricht, unter den Seiten, die in dem Vorlesungsmaterial enthalten sind, auf der Grundlage einer Ähnlichkeit zwischen dem zweiten Merkmalsvektor und den ersten Merkmalsvektoren,
wobei das zweite neuronale Netz Folgendes umfasst:
ein erstes subneuronales Netz, so konfiguriert, dass es Bildverzerrungen korrigiert; und
ein zweites subneuronales Netz, so konfiguriert, dass es einen Merkmalsvektor in Bezug auf mindestens einige Lerninformationen aus einem verzerrungskorrigierten Bild erhält.

2. Lernunterstützungsverfahren nach Anspruch 1, wobei die Ausgabeseiteninformationen mindestens eines von Folgendem umfassen: Informationen auf mindestens einer Seite, die der Vorlesungsszene entspricht, und Führungsinformationen, die verwendet werden, um Informationen auf einem Dokument auszugeben, die die Seite und das Dokument auf einer Anzeige umfassen.

3. Lernunterstützungsverfahren nach Anspruch 1, ferner umfassend:
Ausgeben, auf einer Anzeige, einer von einem Benutzer von mindestens einer Seite ausgewählten Seite auf der Grundlage von Informationen auf mindestens einer Seite, die der Vorlesungsszene und den Benutzereingabeinformationen entsprechen.

4. Lernunterstützungsverfahren nach Anspruch 1, ferner umfassend:
Ausgeben, auf einer Anzeige, von Leitinformationen, die zum Ausgeben des Dokuments auf einer Anzeige verwendet werden.

5. Lernunterstützungsverfahren nach Anspruch 1, wobei das erste neuronale Netz trainiert ist, dass es:
einen Abstand zwischen Merkmalsvektoren vergrößert, die jeweils Seiten entsprechen, die unterschiedliche Lerninformationen im Vorlesungsmaterial umfassen; und
einen Abstand zwischen Merkmalsvektoren verringert, die jeweils Seiten entsprechen, die ähnliche Lerninformationen im Vorlesungsmaterial umfassen.

6. Lernunterstützungsverfahren nach Anspruch 1, wobei der erste Merkmalsvektor einen Merkmalsvektor umfasst, der sich auf mindestens einige Lerninformationen bezieht, die in der Seite enthalten sind.

7. Lernunterstützungsverfahren nach Anspruch 1, wobei die Bildverzerrung mindestens eines von einer ersten Verzerrung, die durch eine mechanische Eigenschaft einer Erfassungsvorrichtung verursacht wird, und einer zweiten Verzerrung, die durch eine Erfassungsumgebung verursacht wird, umfasst.

8. Lernunterstützungsverfahren nach Anspruch 1, ferner umfassend:
Erhalten von Informationen in Notizen, die in der Vorlesungsszene enthalten sind; und
Synthetisieren der Informationen in den Notizen auf der Seite, die der Vorlesungsszene entspricht.

9. Lernunterstützungsverfahren nach Anspruch 8, ferner umfassend:
Ausgeben mindestens einer Seite, die mit den Informationen in Notizen synthetisiert wurde, auf einer Anzeige; und
Bestimmen, ob die mindestens eine Seite, die mit den Informationen in Notizen synthetisiert wurde, auf der Grundlage von Benutzereingabeinformationen verwendet werden soll.

10. Lernunterstützungsverfahren nach Anspruch 8, wobei die Seite, die in dem Dokument enthalten ist, mindestens eine Seite ist, die auf der Grundlage von mindestens einem von Folgendem bestimmt ist: Ausgabeseiteninformationen, die mindestens eine Seite angeben, die der Vorlesungsszene unter den Seiten entspricht, die in dem Vorlesungsmaterial enthalten sind, und Benutzereingabeinformationen, die Informationen über eine Benutzerauswahl von mindestens einer Seite umfassen, die in dem Vorlesungsmaterial enthalten ist.

11. Lernunterstützungsverfahren nach Anspruch 8, wobei das neuronale Netz ein neuronales Netz umfasst, das so trainiert ist, dass es einen Merkmalspunkt des Vorlesungsmaterials, der sich von einem Hintergrund in der Vorlesungsszene unterscheidet, extrahiert und einen entsprechenden Punkt entsprechend dem Merkmalspunkt auf der Seite extrahiert, oder
wobei das Synthetisieren der Informationen in Notizen das Synthetisieren der Informationen in Notizen auf der Grundlage von einer Transformationsbeziehungsinformation zwischen dem Merkmalspunkt und dem entsprechenden Punkt umfasst oder
wobei die Informationen in Notizen mindestens eines von Folgendem umfassen: Positionsinformationen über eine Position in dem Eingabebild, an der Notizen angezeigt werden, und Forminformationen über eine Form der Notizen, die auf dem Eingabebild angezeigt werden.

12. Nichtflüchtiges, computerlesbares Speichermedium, das Anweisungen speichert, die bei Ausführen durch einen Prozessor veranlassen, dass der Prozessor das Lernunterstützungsverfahren nach Anspruch 1 durchführt.

13. Elektronische Vorrichtung, umfassend:
mindestens einen Prozessor (920); und
einen Speicher (930), so konfiguriert, dass er mindestens eine durch den mindestens einen Prozessor ausführbare Anweisung speichert,
wobei der mindestens eine Prozessor so konfiguriert ist, dass er:
Vorlesungsmaterial empfängt (510),
erste Merkmalsvektoren erzeugt (520), die Seiten entsprechen, die in dem Vorlesungsmaterial enthalten sind, unter Verwendung eines ersten neuronalen Netzes, das so trainiert ist, dass es Seiten, die in einem Dokument enthalten sind, unterscheidet;
ein Eingabebild empfängt (530), das eine Vorlesungsszene umfasst, wobei die Vorlesungsszene mindestens einen Teil des Vorlesungsmaterials umfasst;
einen zweiten Merkmalsvektor erzeugt (540), der der Vorlesungsszene entspricht, unter Verwendung eines zweiten neuronalen Netzes; und
Ausgabeseiteninformationen bestimmt (550), die eine Seite angeben, die der Vorlesungsszene entspricht, unter den Seiten, die in dem Vorlesungsmaterial enthalten sind, auf der Grundlage einer Ähnlichkeit zwischen dem zweiten Merkmalsvektor und den ersten Merkmalsvektoren,
wobei das zweite neuronale Netz Folgendes umfasst:
ein erstes subneuronales Netz, so konfiguriert, dass es Bildverzerrungen korrigiert; und
ein zweites subneuronales Netz, so konfiguriert, dass es einen Merkmalsvektor in Bezug auf mindestens einige Lerninformationen aus einem verzerrungskorrigierten Bild erhält.

## Revendications

1. Procédé d'aide à l'apprentissage utilisant un dispositif électronique (901), le procédé d'aide à l'apprentissage comprenant :
la réception (510) d'un support de cours ;
la génération (520) de premiers vecteurs de caractéristiques correspondant aux pages comprises dans le support de cours à l'aide d'un premier réseau neuronal entraîné à distinguer les pages comprises dans un document ;
la réception (530) d'une image d'entrée comprenant une scène de cours, la scène de cours comprenant au moins une partie du support de cours ;
la génération (540) d'un second vecteur de caractéristiques correspondant à la scène de cours à l'aide d'un second réseau neuronal ; et
la détermination (550) d'informations de page de sortie indiquant une page correspondant à la scène de cours, parmi les pages comprises dans le support de cours, sur la base d'une similarité entre le second vecteur de caractéristiques et les premiers vecteurs de caractéristiques,
dans lequel le second réseau neuronal comprend :
un premier sous-réseau neuronal configuré pour corriger la distorsion d'image ; et
un second sous-réseau neuronal configuré pour obtenir un vecteur de caractéristiques lié à au moins certaines informations d'apprentissage à partir d'une image à distorsion corrigée.

2. Procédé d'aide à l'apprentissage selon la revendication 1, dans lequel les informations de page de sortie comprennent au moins l'une parmi : des informations sur au moins une page correspondant à la scène de cours, et des informations de guidage utilisées pour sortir des informations sur un document comprenant la page et le document sur un affichage.

3. Procédé d'aide à l'apprentissage selon la revendication 1, comprenant en outre :
la sortie, sur un affichage, d'une page sélectionnée par un utilisateur à partir d'au moins une page sur la base d'informations sur au moins une page correspondant à la scène de cours et des informations d'entrée d'utilisateur.

4. Procédé d'aide à l'apprentissage selon la revendication 1, comprenant en outre :
la sortie, sur un affichage, d'informations de guidage utilisées pour sortir le document sur un affichage.

5. Procédé d'aide à l'apprentissage selon la revendication 1, dans lequel le premier réseau neuronal est entraîné à :
augmenter une distance entre les vecteurs de caractéristiques correspondant respectivement à des pages comprenant différentes informations d'apprentissage dans le support de cours ; et
réduire une distance entre les vecteurs de caractéristiques correspondant respectivement à des pages comprenant des informations d'apprentissage similaires dans le support de cours.

6. Procédé d'aide à l'apprentissage selon la revendication 1, dans lequel le premier vecteur de caractéristiques comprend un vecteur de caractéristiques lié à au moins certaines informations d'apprentissage comprises dans la page.

7. Procédé d'aide à l'apprentissage selon la revendication 1, dans lequel la distorsion d'image comprend au moins l'une d'une première distorsion provoquée par une caractéristique mécanique d'un dispositif de capture et d'une seconde distorsion provoquée par un environnement de capture.

8. Procédé d'aide à l'apprentissage selon la revendication 1, comprenant en outre :
l'obtention d'informations dans des notes comprises dans la scène de cours ; et
la synthèse des informations dans les notes parmi la page correspondant à la scène de cours.

9. Procédé d'aide à l'apprentissage selon la revendication 8, comprenant en outre :
la sortie d'au moins une page synthétisée avec les informations dans des notes sur un affichage ; et
la détermination s'il convient d'utiliser l'au moins une page synthétisée avec les informations dans des notes sur la base des informations d'entrée d'utilisateur.

10. Procédé d'aide à l'apprentissage selon la revendication 8, dans lequel la page comprise dans le document est au moins une page déterminée sur la base d'au moins l'une parmi : des informations de page de sortie indiquant au moins une page correspondant à la scène de cours parmi les pages comprises dans le support de cours, et des informations d'entrée d'utilisateur comprenant des informations sur une sélection d'utilisateur d'au moins une page comprise dans le support de cours.

11. Procédé d'aide à l'apprentissage selon la revendication 8, dans lequel le réseau neuronal comprend un réseau neuronal entraîné à extraire un point caractéristique du support de cours distingué d'un arrière-plan dans la scène de cours et à extraire un point correspondant correspondant au point caractéristique dans la page, ou
dans lequel la synthèse des informations dans les notes comprend la synthèse des informations dans les notes sur la base d'informations relatives à une relation de transformation entre le point caractéristique et le point correspondant, ou
dans lequel les informations dans les notes comprennent au moins l'une parmi : des informations de position relatives à une position dans l'image d'entrée au niveau de laquelle les notes sont affichées, et des informations de forme relatives à une forme des notes affichées sur l'image d'entrée.

12. Support de stockage lisible par ordinateur non transitoire stockant des instructions qui, lorsqu'elles sont exécutées par un processeur, amènent le processeur à réaliser le procédé d'aide à l'apprentissage selon la revendication 1.

13. Dispositif électronique, comprenant :
au moins un processeur (920) ; et
une mémoire (930) configurée pour stocker au moins une instruction exécutable par l'au moins un processeur,
dans lequel l'au moins un processeur est conçu pour :
recevoir (510) un support de cours ;
générer (520) des premiers vecteurs de caractéristiques correspondant aux pages comprises dans le support de cours à l'aide d'un premier réseau neuronal entraîné à distinguer les pages comprises dans un document ;
recevoir (530) une image d'entrée comprenant une scène de cours, la scène de cours comprenant au moins une partie du support de cours ;
générer (540) un second vecteur de caractéristiques correspondant à la scène de cours à l'aide d'un second réseau neuronal ; et
déterminer (550) des informations de page de sortie indiquant une page correspondant à la scène de cours, parmi les pages comprises dans le support de cours, sur la base d'une similarité entre le second vecteur de caractéristiques et les premiers vecteurs de caractéristiques,
dans lequel le second réseau neuronal comprend :
un premier sous-réseau neuronal configuré pour corriger la distorsion d'image ; et
un second sous-réseau neuronal configuré pour obtenir un vecteur de caractéristiques lié à au moins certaines informations d'apprentissage à partir d'une image à distorsion corrigée.
